# EUROPÄISCHE PATENTSCHRIFT

(11) **EP 1 996 385 B1**
(45) Veröffentlichungstag und Bekanntmachung des Hinweises auf die Patenterteilung: **05.10.2011**
(21) Anmeldenummer: 06705402.3
(22) Anmeldetag: 20.03.2006
(51) Int. Cl.: B29C 49/42, B29C 49/58, B29C 49/36, B29C 49/06

(54) **BLASSTATION FÜR STRECKBLASMASCHINEN**
BLOW-MOULDING STATION FOR STRETCH BLOW-MOULDING MACHINES
POSTE DE SOUFFLAGE POUR MACHINE DE SOUFFLAGE-ETIRAGE

(43) Veröffentlichungstag der Anmeldung: 03.12.2008
(60) Teilanmeldung: 09075332.8
(73) Patentinhaber: EUGEN SEITZ AG, CH-8623 Wetzikon (CH)
(72) Erfinder: RYMANN, Othmar, CH-8362 Balterswil (CH)
(74) Vertreter: EGLI-EUROPEAN PATENT ATTORNEYS
(86) Internationale Anmeldenummer: PCT/CH2006/000162
(87) Internationale Veröffentlichungsnummer: WO 2007/107016

(56) Entgegenhaltungen:
- EP-A- 1 566 258
- EP-A1- 1 535 720
- WO-A2-2006/024462
- DE-U1- 20 018 500
- FR-A1- 2 872 081
- US-A1- 2004 173 949

## Beschreibung

Die vorliegende Erfindung betrifft eine Blasstation für Streckblasmaschine nach dem Oberbegriff von Anspruch 1 sowie eine Streckblasmaschine nach dem Oberbegriff von Anspruch 11, wie in dem Dokument DE-U-20018500 offenbart wird.

Die Herstellung von Kunststoffflaschen, insbesondere von PET-Flaschen, erfolgt herkömmlicherweise mittels sogenannten Streckblasmaschinen. In diesen Streckblasmaschinen werden Flaschenrohlinge auf ihre endgültige Form aufgeblasen. Hierfür wird jeder Flaschenrohling in einer Blasstation in einen Formkörper eingeführt und dort für den eigentlichen Blasvorgang fixiert.

Der Formkörper ist dabei vorteilhaft mindestens zweiteilig aufgebaut, in welchen in geöffnetem Zustand der Flaschenrohling eingeführt wird und aus welchem nach dem Blasvorgang die fertig geblasene Flasche entfernt wird. Dabei ist der Flaschenrohling über seinen bereits seine fertige Form aufweisenden Flaschenkopf gehalten resp. fixiert.

An der Blasstation ist weiter ein gegenüber dem Formkörper verschiebbarer Blaszylinder derart angeordnet, dass er dicht gegen den jeweiligen Flaschenkopf in Anschlag gebracht werden kann. Über Zuleitungskanäle, die mit dem Blaszylinder verbunden sind, erfolgt für den Blasvorgang die Zufuhr und für den Entlüftungsvorgang die Abfuhr der Druckluft über den Flaschenkopf in den resp. aus dem Flaschenkörper.

Der Blasvorgang wird vorteilhaft zweistufig ausgeführt, mit einer ersten sogenannten Vorblasstufe, in welcher Druckluft beispielsweise mit einem Druck zwischen 4 und 20 bar in den Flaschenrohling eingeblasen wird und einer nachfolgenden eigentlichen Blasstufe, in welcher beispielsweise Druckwerte zwischen 10 bis 45 bar eingesetzt werden.

Zur Steuerung des Blas- und Entlüftungsprozesses sind dem Blaszylinder nun Ventile zugeordnet, welche zur Steuerung des Druckluftstromes zum Blaszylinder resp. dem Ablassen oder Rückführen der Druckluft nach dem Blasvorgang dienen. Für einen oben geschilderten zweistufigen Blasvorgang werden in der Regel drei Ventile eingesetzt, welche ihrerseits von Steuer- resp. Pilotventilen angesteuert werden.

In einer vorteilhaften Ausführungsform von herkömmlichen Streckblasmaschinen sind mehrere solcher Blasstationen konzentrisch um eine zentrale Achse der Streckblasmaschine angeordnet. Die Blasstationen werden um diese zentrale Achse rotierend angetrieben, um einen fortlaufenden, kontinuierlichen Produktionsprozess zu ermöglichen.

Mit derartigen Karussellmaschinen können entsprechend der Anzahl Blasstationen und der Grösse der Flaschen bis über 40'000 Flaschen / Stunde fertig geblasen werden.

Die Anordnung der Ventile und Zu- resp. Ableitungen an der Blasstation sollte derart gewählt werden, dass eine möglichste uneingeschränkte Zugänglichkeit zum Formkörper des Blaszylinders gewährleistet ist, um die Flaschenrohlinge einfach und zuverlässig zuführen zu können resp. die fertig geblasenen Flaschen auch wieder aus dem Formkörper entnehmen zu können. Weiter sollten für Wartungs und Unterhaltsarbeiten möglichst alle funktionalen Komponenten der Blasstation einfach zugänglich sein, damit hierfür nur kurze Produktionsunterbrüche in Kauf genommen werden müssen. Für eine hohe Produktionsrate müssen diese Vorgänge selbstverständlich automatisiert erfolgen.

Weiter sollen der Platzbedarf der gesamten Maschine und insbesondere deren Grundriss so klein wie möglich ausfallen, d.h. eine kompakte Bauweise wird bevorzugt.

Die Aufgabe der vorliegenden Erfindung bestand nun darin, eine Blasstation für Streckblasmaschinen zu finden, die einen möglichst platzsparenden Aufbau bei optimaler Zugänglichkeit zu den einzelnen Komponenten aufweist.

Diese Aufgabe wird erfindungsgemäss durch eine Blasstation mit den Merkmalen nach Anspruch 1 gelöst. Weitere, bevorzugte Ausführungsformen ergeben sich aus den Merkmalen der weiteren Ansprüche 2 bis 10.

Die Aufgabe wird erfindungsgemäss gelöst durch eine Blasstation für eine Streckblasmaschine mit einer zentralen vertikalen Drehachse und im Bereich der Drehachse angeordnetem Drehverteiler für Druckluft und Strom, mit jeweils mindestens einem Formkörper zur Aufnahme von Flaschenrohlingen, einem gegenüber dem Formkörper verschiebbar angeordnetem Blaszylinder, am Blaszylinder angeordnete Ventile zur Regelung der Zufuhr und Abfuhr von Druckluft und Anschlüssen für Leitungen zur Verbindung des Blaszylinders mit dem Drehverteiler. Dabei ist der

Blaszylinder parallel zur Drehachse der Streckblasmaschine entlang seiner Längsachse verschiebbar vertikal oberhalb des Formkörpers in der Blasstation angeordnet. Weiter sind die Ventile in einem einzigen Blasblock angeordnet, der seitlich des Blaszylinders an der Blasstation angeordnet ist.

Durch diese Anordnung der Ventile in einem einzigen Blasblock, der seitlich am Blaszylinder angeordnet ist, ist der Platzbedarf für die Ventile sehr klein. Die Ventile selbst sind vorteilhaft ebenfalls vertikal übereinander, parallel zur Längsachse des Blaszylinders im Blasblock angeordnet und weisen damit sehr kurze Verbindungskanäle untereinander und zum Blaszylinder auf. Ein weiterer Vorteil ist darin zu sehen, dass die Zuleitungen vom zentral angeordneten Drehverteiler mit nur sehr kurzen Leitungen in radialer Richtung von der Drehachse aus direkt in den Blasblock hinein realisiert werden können.

Beispielsweise sind am Blasblock Steuer- resp. Pilotventile zur Ansteuerung der Ventile angeordnet, wobei diese vorzugsweise jeweils übereinander parallel zur Längsachse vom Blasblock gemeinsam zur Vorderseite weisend angeordnet sind. Damit sind die Steuer- resp. Pilotventile einfach von Aussen zugänglich, was die Wartung und den Unterhalt dieser Steuer- resp. Pilotventile wesentlich erleichtert. Neben der leichten Zugänglichkeit ist damit auch deren Funktionskontrolle einfach zu realisieren. Weiter können damit Betriebsunterbrüche im Falle von Wartung oder Reparaturen vorteilhaft auf eine minimal kurze Zeitspanne beschränkt werden.

Beispielsweise sind die Anschlüsse für Leitungen vom Drehverteiler her jeweils an der Rückseite des Blasblocks angeordnet. Wie bereits beschrieben, können somit sehr kurze Leitungswege realisiert werden, was einerseits die Reaktions- und Bearbeitungsgeschwindigkeit verkürzt und den Druckverlust über die kurzen Leitungslängen reduziert.

Beispielsweise ist an der Oberseite des Blasblocks parallel zur Drehachse ausgerichtet ein Ausblasventil angeordnet. Neben der Zuführung der Druckluft kann somit in gleichen Blasblock auch gleichzeitig das Ventil zum Ableiten der für den Blasprozess verbrauchten Druckluft aus dem Blaszylinder angeordnet sein.

Beispielsweise ist axial oberhalb des Ausblasventils ein Schalldämpfer angeordnet. Über diesen Schalldämpfer wird der an die Umgebung abzugebende Restdruck ausgeblasen und dabei gleichzeitig die Lärmemission in Grenzen gehalten.

Beispielsweise weist der Schalldämpfer einen Ausblaskanal mit im Wesentlichen parallel zur Längsachse des Blaszylinders verlaufender Ausblasrichtung auf. Damit wird die Ausblasluft in Kanälen annähernd parallel zur Längsachse im Schalldämpfer geführt. Damit wird auch für die Abluft kein zusätzlicher Platzbedarf in radialer Richtung in Bezug auf die Längsachse benötigt, was sich sehr positiv auf den Platzbedarf, d.h. insbesondere der benötigten Grundrissfläche der Blasstation, auswirkt. Durch die geringe Grundrissfläche kann auch der Grundriss einer mit derartigen Blasstationen ausgerüsteten Streckblasmaschine vorteilhaft sehr klein und damit kompakt dimensioniert werden.

Beispielsweise weist der Schalldämpfer einen Ausblaskanal mit im Wesentlichen senkrecht zur Längsachse des Blaszylinders verlaufender Ausblasrichtung auf, vorzugsweise senkrecht von der Rückseite der Blasstation hin nach Aussen weisend verlaufend. Wenn der zur Verfügung stehend Raum in vertikaler Richtung begrenzt ist oder nicht ausgenutzt werden soll, kann die Abluft auch radial in Richtung der Drehachse der Streckblasmaschine zurückgeführt werden und dort ggf. in einem gemeinsamen Kanal zusammengeführt und gemeinsam nach oben abgeführt werden.

Beispielsweise ist ein Steuerventil zur Steuerung der Verschiebe- resp. Hubbewegung des Blaszylinders ebenfalls seitlich am Blaszylinder angeordnet, vorzugsweise an der dem Blasblock gegenüberliegenden Seite des Blaszylinders. Hierfür wird vorteilhaft ein 5/2-weg Steuerventil eingesetzt, dessen Steuerleitungen ebenfalls vorzugsweise radial nach innen verlaufend direkt mit dem Drehverteiler verbunden sind.

Beispielsweise sind alle Bedienelemente und Funktionselemente nach Aussen zur Vorderseite der Blasstation weisend am resp. um den Blaszylinder angeordnet. Dies vereinfacht die Bedienung und allfällige Wartung und Unterhalt der Funktionselemente massgeblich. Auch können damit die Blasstationen mit nur sehr geringem Abstand zur Drehachse angeordnet und ausgeführt werden, was die Gesamtabmessung positiv beeinflusst.

Beispielsweise sind alle Bedienelemente und Funktionselemente in einem gemeinsamen Gehäuse angeordnet, welches am Blaszylinder angeordnet ist, vorzugsweise einem Zylinderträger. Damit wird einerseits eine formschöne, optisch ansprechende Einbindung der nach Aussen zugänglichen oder bedienbaren Elemente erzielt und andererseits auch eine Abdeckung der Funktionselemente erreicht, was die Wartungsarbeit erleichtert. Weiter können auch sämtliche Steuerleitungen und Druckluft- resp. Abluftleitungen von resp. zu den Ventilen in diesem gemeinsamen Gehäuse angeordnet sein.

Die Aufgabe wird weiter durch eine Streckblasmaschine nach Anspruch 11 mit einer zentralen vertikalen Drehachse und im Bereich der Drehachse angeordnetem Drehverteiler für Druckluft und Strom gelöst, bei welcher Blasstationen nach einem der Ansprüche 1 bis 10 radial um die Drehachse angeordnet sind, wobei die Aussenseite der Blasstationen radial von der Drehachse nach Aussen weisend angeordnet sind.

Die einzelnen Blasstationen können vorteilhaft an regelmässig in Umfangrichtung verteilt angeordneten Ständern in radial gleichen Abständen zur Drehachse angebracht sein. Damit können die Blasstationen um die Drehachse umlaufend betrieben werden und einen ununterbrochenen Betrieb über eine lange Betriebsdauer realisiert werden.

Bei einer Blasrotationsmaschine erfolgt dies beispielsweise durch ein um die Hochachse drehbar angetriebenes Blasrad, an welchem die Ständer resp. die Blasstationen sternförmig angeordnet sind.

Ein prinzipielles Ausführungsbeispiel der vorliegenden Erfindung wird nachstehend anhand von Figuren noch näher erläutert. Es zeigen
Fig. 1 schematisch die Aufsicht auf einen Bereich einer Streckblasmaschine mit einer erfindungsgemässen Blasstation;
Fig. 2 schematisch die radiale Seitenansicht auf den Bereich von Figur 1.

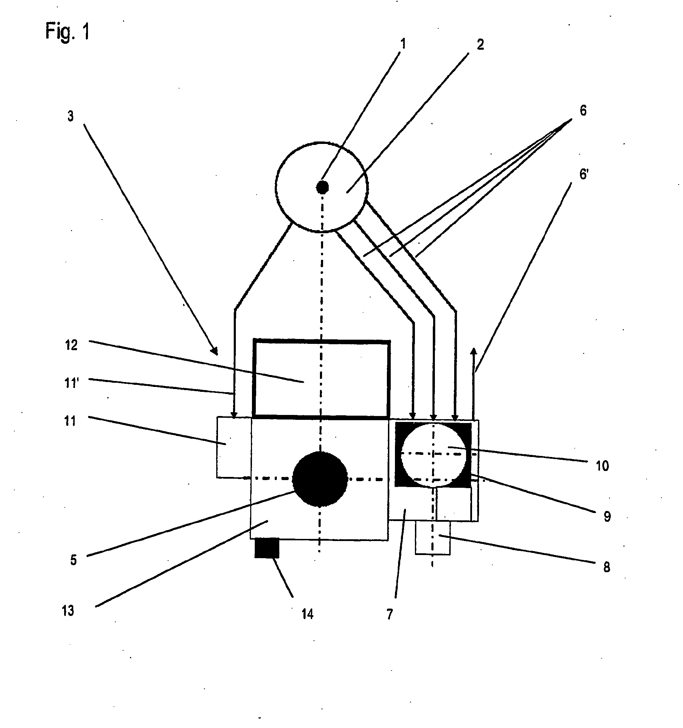

In Figur 1 ist rein schematisch die Aufsicht auf eine erfindungsgemässe Blasstation einer Streckblasmaschine dargestellt. Im Bereich der Drehachse 1 des Streckblasmaschine ist konzentrisch der Drehverteiler 2 angeordnet resp. ausgeführt. Der Drehverteiler 2 kann beispielsweise ein motorisch angetriebenes, um die Drehachse 1 rotierendes Blasrad sein.

Aus diesem Drehverteiler 2 werden die für den Blasprozess notwendige Druckluft bereitgestellt, wie auch Strom und allenfalls weitere technisch Bedingte Elemente, wie beispielsweise die Bereitstellung von Kühlwasser. Auch kann in den Drehverteiler beispielsweise eine Rückführung der sich im Bereich des Blasblocks angesammelten abzulassenden Druckluft erfolgen. Dies erfolgt beispielsweise mittels zuführenden Leitungen 6 resp. Rückführungsleitung 6'.

Eine Blasstation 3 ist radial von der Drehachse 1 beabstandet angeordnet, mit einem Maschinenständer 12, der parallel zur Hochachse 1 angeordnet ist. An diesem Maschinenständer 12 sind die Komponenten der Blasstation 3 angeordnet.

Der Blaszylinder 5 ist in einem einen rechteckigen Querschnitt aufweisenden Zylinderträger 13 entlang seiner Längsachse A verschiebbar angeordnet. Damit lässt sich der Blaszylinder 5 entsprechend der durch den Pfeil H angedeuteten Richtung parallel zur Längsachse A und damit auch parallel zur Drehachse 1 der Streckblasmaschine bewegen.

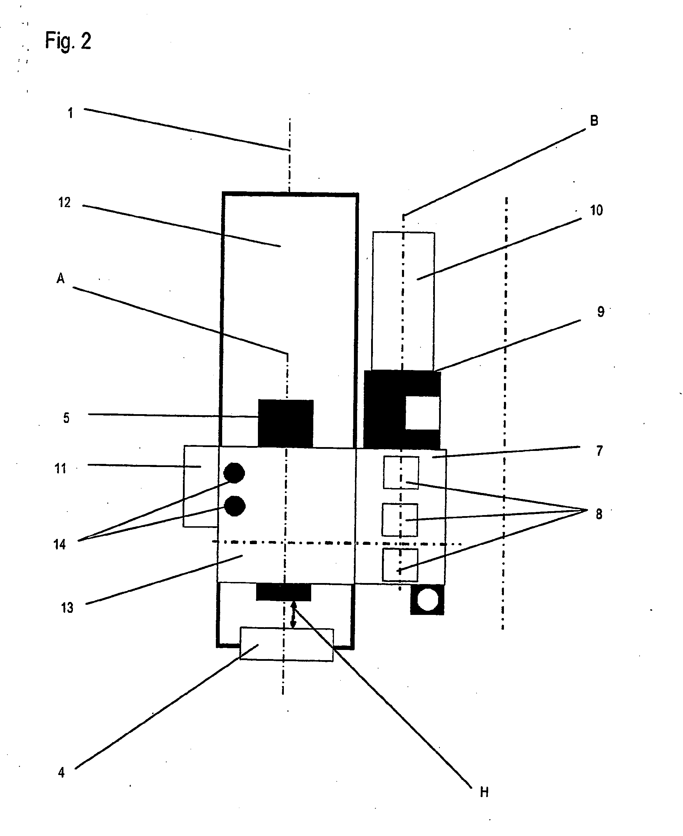

Nach unten kann damit der Blaszylinder 5 dicht gegen den Formkörper 4 in Anschlag gebracht werden, von welchem in Figur 2 lediglich dessen Oberseite schematisch dargestellt ist. In diesem Formkörper 4 wird der zu bearbeitende Flaschenrohling (nicht dargestellt) in bekannter Weise fixiert und die nach oben gerichtete Öffnung des Flaschenrohlings wird mit dem Blaszylinder 5 in Verbindung gebracht.

Der Blasblock 7. ist vorteilhaft rechts vom Blaszylinder 5 angeordnet, beispielsweise durch Befestigung am Zylinderträger 13. Im Blasblock 7 sind die für das zweistufige Blasverfahren notwendigen Ventile gemeinsam angeordnet, wie dies beispielsweise aus dem Stand der Technik bekannt ist. So sind beispielsweise ein Vorblasventil, ein Hauptblasventil und ein Sparventil unmittelbar übereinander im Blasblock 7 angeordnet.

Die Ventile sind dabei vorteilhaft übereinander in einer parallel zur Drehachse 1 verlaufenden Achse angeordnet. Die jedem dieser Ventile zugeordneten Steuer- resp. Pilotventile 8 sind nun radial von der Drehachse 1 nach Aussen hin weisend ebenfalls am Blasblock 7 angeordnet. Damit sind diese Steuer- oder Pilotventile 8 leicht von der Aussenseite der Streckblasmaschine her sichtbar und zugänglich.

Das Ausblasventil 9 ist vorteilhaft oberhalb des Blasblocks 7 in der Verlängerung der Blasblockachse B angeordnet. Vom Ausblasventil 9 führt weiter ein Schalldämpfer 10 ebenfalls in Verlängerung der Blasblockachse B weiter nach oben, parallel zur Drehachse 1. Hierfür wird vorteilhaft ein Ausblasventil 9 in koaxialer Bauweise eingesetzt. Damit kann die an die Umgebung abzuführende Abluft aus dem Blaszylinder 5 resp. der Blasstation 3 platzsparend abgeführt werden, ohne dass in radialer Richtung vom Drehzentrum 1 her hierfür ein zusätzlicher Raumbedarf bestehen würde. D.h. die notwendige Grundfläche für die Streckblasmaschine wird durch den Schalldämpfer 10 und die Abführleitungen nicht beeinflusst.

Alternativ dazu könnte der Schalldämpfer 10 auch radial nach Innen in Richtung des Drehverteilers 2 ausgebildet sein, und die Abführleitung im Bereich des Drehverteilers zentral nach oben geführt werden.

Weiter ist ebenfalls seitlich des Blaszylinders 5 auf dessen linken Seite ein 5/2-weg Steuerventil 11 angeordnet, dass der Steuerung der Hubbewegung des Blaszylinders 5 dient. Die Versorgungsleitung 11' dieses Steuerventils 11 können ebenfalls nach hinten radial in Richtung des Drehverteilers ausgeführt werden, wobei auch hier der Zugriff von vorne auf das Steuerventil 11 ungehindert gewährt bleibt. Die eigentlichen Steuerleitungen vom Steuerventil 11 zum Blaszylinder 5 sind vorteilhaft im Zylinderträger 13 integriert angeordnet.

Weitere Elemente, insbesondere Bedien- oder Anzeigeelemente wie beispielsweise Schaltknöpfe oder Zustandslampen, oder beispielsweise Abluftdrosseln 14 sind vorteilhaft an der Frontseite des Zylinderträgers 13 angeordnet und sind damit ebenfalls gut sichtbar und einfach und behinderungsfrei zugänglich.

Das gesamte Layout ist einerseits sehr kompakt und platzsparend aufgebaut, was zu kleinen Grundflächen der Streckblasmaschinen führt, und bietet andererseits eine optimale Zugänglichkeit von vorne, d.h. radial von Aussen in Richtung der Drehachse 1. Somit sind die einzelnen Komponenten sowohl gut sichtbar, einfach bedienbar und im Falle von Reparaturen, Wartungsarbeiten oder Austausch optimal zugänglich, ohne dass die Blasstation 3 hierfür teilweise oder komplett demontiert werden müsste.

## Patentansprüche

1. Blasstation für eine Streckblasmaschine mit einer zentralen vertikalen Drehachse (1) und im Bereich der Drehachse (1) angeordnetem Drehverteiler (2) für Druckluft und Strom, mit jeweils mindestens einem Formkörper (4) zur Aufnahme von Flaschenrohlingen, einem gegenüber dem Formkörper (4) verschiebbar angeordnetem Blaszylinder (5), am Blaszylinder (5) angeordnete Ventile zur Regelung der Zufuhr und Abfuhr von Druckluft und Anschlüssen für Leitungen (6) zur Verbindung der Ventile mit dem Drehverteiler (2), wobei der Blaszylinder (5) parallel zur Drehachse (1) der Streckblasmaschine entlang seiner Längsachse (A) verschiebbar vertikal oberhalb des Formkörpers (4) in der Blasstation (3) angeordnet ist sowie dass die Ventile in einem einzigen Blasblock (7) angeordnet sind, **dadurch gekennzeichnet, dass** der Blasblock (7) seitlich des Blaszylinders (5) an der Blasstation (3) angeordnet ist.

2. Blasstation nach Anspruch 1, **dadurch gekennzeichnet, dass** am Blasblock (7) Steuer- resp. Pilotventile (8) zur Ansteuerung der Ventile angeordnet sind, vorzugsweise jeweils übereinander parallel zur Längsachse (A) vom Blasblock (7) gemeinsam zur Vorderseite weisend angeordnet sind.

3. Blasstation nach Anspruch 1 oder 2, **dadurch gekennzeichnet, dass** Anschlüsse für Leitungen (6) vom Drehverteiler (2) her jeweils an der Rückseite des Blasblocks (7) angeordnet sind.

4. Blasstation nach einem der Ansprüche 1 bis 3, **dadurch gekennzeichnet, dass** an der Oberseite des Blasblocks (7) parallel zur Längsachse (A) ausgerichtet ein Ausblasventil (9) angeordnet ist.

5. Blasstation nach Anspruch 4, **dadurch gekennzeichnet, dass** axial oberhalb des Ausblasventils (9) ein Schalldämpfer (10) angeordnet ist.

6. Blasstation nach Anspruch 5, **dadurch gekennzeichnet, dass** der Schalldämpfer (10) einen Ausblaskanal mit im Wesentlich parallel zur Längsachse (A) verlaufender Ausblasrichtung aufweist.

7. Blasstation nach Anspruch 5, **dadurch gekennzeichnet, dass** der Schalldämpfer (10) einen Ausblaskanal mit im Wesentlichen senkrecht zur Längsachse (A) verlaufender Ausblasrichtung aufweist, vorzugsweise senkrecht von der Rückseite der Blasstation (3) hin nach Aussen weisend verlaufen.

8. Blasstation nach einem der Ansprüche 1 bis 7, **dadurch gekennzeichnet, dass** ein Steuerventil (11) zur Steuerung der Verschiebe- resp. Hubbewegung des Blaszylinders (5) ebenfalls seitlich am Blaszylinder (5) angeordnet ist, vorzugsweise an der dem Blasblock (7) gegenüberliegenden Seite des Blaszylinders (5).

9. Blasstation nach einem der Ansprüche 1 bis 8, **dadurch gekennzeichnet, dass** alle Bedienelemente und Funktionselemente nach Aussen zur Vorderseite der Blasstation (3) weisend am resp. um den Blaszylinder (5) angeordnet sind.

10. Blasstation nach Anspruch 9, **dadurch gekennzeichnet, dass** alle Bedienelemente und Funktionselemente in einem gemeinsamen Gehäuse angeordnet sind, welches am resp. um den Blaszylinder (5) herum angeordnet ist, vorzugsweise an einem Zylinderträger (13).

11. Streckblasmaschine mit einer zentralen vertikalen Drehachse (1) und im Bereich der Drehachse (1) angeordnetem Drehverteiler (2) für Druckluft und Strom, **dadurch gekennzeichnet, dass** Blasstationen (3) nach einem der Ansprüche 1 bis 10 radial um die Drehachse (1) angeordnet sind, wobei die Aussenseite der Blasstationen (3) radial von der Drehachse (1) nach Aussen weisend angeordnet sind.

## Claims

1. Blow station for a blow molding machine with a central vertical rotating axis (1) and rotating distributor (2) for compressed air and electricity arranged in the region of the rotating axis (1), with at least one mold (4) for receiving bottle molding blanks, a blow cylinder (5) movably arranged opposite to said mold (4), valves arranged at the blow cylinder (5) for controlling of the supplying and ventilating of compressed air and connectors for the pipes (6) for connecting the valves with the rotating distributor (2),whereas said blow cylinder (5) is arranged parallel to the rotating axis (1) of the blow molding machine and movable along its longitudinal axis (A) upright above the mold (4) in the blow station (3) and that the valves are arranged within a single blow unit (7),**characterized in that** said blow unit (7) being arranged laterally with respect to the blow cylinder (5) of blow station (3).

2. Blow station according to claim 1, **characterized in that** control valves or pilot valves (8) respectively are arranged at blow unit (7) for controlling the valves, preferably arranged each above each other parallel to the longitudinal axis (A) of blow unit (7) and mutually arranged looking to the front side.

3. Blow station according to claim 1 or 2, **characterized in that** said connectors for said pipes (6) originating from said rotating connector (2) are arranged each at the back side of the blow unit (7).

4. Blow station according to one of claims 1 to 3, **characterized in that** a blow out valve (9) is arranged on the upper side of blow unit (7) parallel with respect to the longitudinal axis (A).

5. Blow station according to claim 4, **characterized in that** a silencer (10) is arranged axially above said blow out valve (9).

6. Blow station according to claim 5, **characterized in that** said silencer (10) provides a blow out channel having a blow out direction substantially parallel with respect to the longitudinal axis (A).

7. Blow station according to claim 5, **characterized in that** said silencer (10) provides a blow out channel having a blow out direction substantially perpendicular to the longitudinal axis (A), preferably running perpendicular from the backside of the blow station (3) in direction to the outside.

8. Blow station according to one of claims 1 to 7, **characterized in that** a control valve (11) for controlling the sliding movement or stroke movement respectively of the blow cylinder (5) is arranged laterally of said blow cylinder (5), preferably at the side of the blow cylinder (5) opposite to the blow unit (7).

9. Blow station according to one of claims 1 to 8, **characterized in that** all control elements and functional elements are arranged facing outwardly to the front side of blow station (3) at or around blow cylinder (5).

10. Blow station according to claim 9, **characterized in that** all control elements and functional elements are arranged within a combined housing that is arranged at or around respectively of blow cylinder (5), preferably at a cylinder mounting (13).

11. Blow molding machine with a vertical central rotating axis (1) and a rotating distributor (2) for compressed air and electricity arranged in the region of the rotating axis (1), **characterized in that** blow stations (3) according to one of claims 1 to 10 are arranged radially around said rotating axis (1), whereby the outside of each of said blow stations (3) is arranged radially outward from the rotating axis (1).

## Revendications

1. Poste de soufflage pour machine d'étirage et de soufflage comprenant un axe de rotation vertical central (1) et un distributeur rotatif (2) placé au niveau de l'axe de rotation (1) pour de l'air comprimé et du courant, comprenant chacun au moins un corps de moule (4) pour recevoir des préformes de bouteille, un cylindre de soufflage (5) disposé de manière mobile par rapport au corps de moule (4), des valves disposées sur le cylindre de soufflage (5) pour réguler l'arrivée et l'évacuation de l'air comprimé, et des raccords pour des conduits (6) pour relier les valves au distributeur rotatif (2), sachant que le cylindre de soufflage (5) est disposé dans le poste de soufflage (3) verticalement au-dessus du corps de moule (4) en pouvant être déplacé le long de son axe longitudinal (A) parallèlement à l'axe de rotation (1) de la machine d'étirage et de soufflage, et les valves sont placées dans un bloc de soufflage (7) unique, **caractérisé en ce que** le bloc de soufflage (7) est disposé sur le côté du cylindre de soufflage (5) sur le poste de soufflage (3).

2. Poste de soufflage selon la revendication 1, **caractérisé en ce que** des valves de commande respectivement de pilotage (8) pour commander les valves sont disposées sur le bloc de soufflage (7), de préférence respectivement l'une sur l'autre parallèlement à l'axe longitudinal (A) du bloc de soufflage (7) en pointant conjointement vers la face avant.

3. Poste de soufflage selon la revendication 1 ou 2, **caractérisé en ce que** des raccords pour des conduits (6) sont placés depuis le distributeur rotatif (2) respectivement sur la face arrière du bloc de soufflage (7).

4. Poste de soufflage selon l'une des revendications 1 à 3, **caractérisé en ce qu'**une valve de purge (9) est disposée sur le côté supérieur du bloc de soufflage (7) en étant dirigée parallèlement à l'axe longitudinal (A).

5. Poste de soufflage selon la revendication 4, **caractérisé en ce qu'**un silencieux d'échappement (10) est placé axialement au-dessus de la valve de purge (9).

6. Poste de soufflage selon la revendication 5, **caractérisé en ce que** le silencieux d'échappement (10) présente un canal de purge comprenant un dispositif de purge s'étendant essentiellement parallèlement à l'axe longitudinal (A).

7. Poste de soufflage selon la revendication 5, **caractérisé en ce que** le silencieux d'échappement (10) présente un canal d'évacuation comprenant un dispositif de purge s'étendant essentiellement verticalement à l'axe longitudinal (A), de préférence verticalement en pointant vers l'extérieur depuis la face arrière du poste de soufflage (3).

8. Poste de soufflage selon l'une des revendications 1 à 7, **caractérisé en ce qu'**une valve de commande (11) pour commander le mouvement de déplacement respectivement de course du cylindre de soufflage (5) est disposée également sur le côté du cylindre de soufflage (5), de préférence sur le côté du cylindre de soufflage (5) faisant face au bloc de soufflage (7).

9. Poste de soufflage selon l'une des revendications 1 à 8, **caractérisé en ce que** tous les éléments opérationnels et fonctionnels sont disposés sur le, respectivement, autour du cylindre de soufflage (5) en pointant vers l'extérieur en direction de la face avant du poste de soufflage (3).

10. Poste de soufflage selon la revendication 9, **caractérisé en ce que** tous les éléments opérationnels et fonctionnels sont disposés dans un boîtier commun, lequel est disposé sur le, respectivement, autour du cylindre de soufflage (5), de préférence sur un porte-cylindre (13).

11. Machine d'étirage et de soufflage comprenant un axe de rotation (1) vertical central et un distributeur rotatif (2) placé au niveau de l'axe de rotation (1) pour de l'air comprimé et du courant, **caractérisé en ce que** les postes de soufflage (3) selon l'une des revendications 1 à 10 sont disposés radialement autour de l'axe de rotation (1), sachant que le côté extérieur des postes de soufflage (3) est disposé en pointant vers l'extérieur, radialement depuis l'axe de rotation (1).
